# EUROPEAN PATENT APPLICATION

(11) **EP 2 555 349 A1**
(43) Date of publication of application: **06.02.2013**
(21) Application number: 11176737.2
(22) Date of filing: 05.08.2011
(51) Int. Cl.: H01S 3/094, G01N 21/65, H01S 3/067, H01S 3/107, H01S 3/30

(54) **An enhanced Raman scattering laser system**

(71) Applicant: Nederlandse Organisatie voor Toegepast -Natuurwetenschappelijk Onderzoek TNO, 2628 VK Delft (NL)
(72) Inventor: Boerkamp, Martijn J., 2628 VK Delft (NL); van Dooren, Léon, 2628 VK Delft (NL)
(74) Representative: Jansen, Cornelis Marinus

(57) **Abstract**

An enhanced Raman scattering laser system is described comprising a laser (1), a first polarized beam splitter (2), focussing optics (5) and a hollow core photonic bandgap fibre (6) arranged for receiving focussed laser light from the focussing optics at an input end of the hollow core photonic bandgap fibre. An optical spectrum analyser (8) is arranged for receiving laser light coming from the output end of the hollow core photonic bandgap fibre. A fibre Bragg grating (7) is positioned between the output end of the hollow core photonic bandgap fibre (6) and the optical spectrum analyser (8) and reflects part of the laser light back into the hollow core photonic fibre and passes through Raman scattered light to the optical spectrum analyser. A second polarized beam splitter (4) is positioned between the first polarized beam splitter (2) and the focusing optics (5) and is arranged for receiving laser light passed through the first polarized beam splitter and for passing through laser light to the focussing optics. A Pockels cell (3) is positioned between the first and second polarized beam splitters, and a Pockels cell driver is adapted for rotating the polarization of laser light during the first passage through the Pockels cell over 90° and for rotating the polarization of laser light during second and further passages through the Pockels cell over 0°.

## Description

### TECHNICAL FIELD

The invention relates to an enhanced Raman scattering laser system according to the preamble of claim 1. Such laser systems can among other things be used in the medical sector, for example for detecting tumour markers in the breath of patients. Furthermore such a laser system can be used to monitor chemical processes, whereby a spectrum of the total amount of gases present can be analyzed.

### BACKGROUND OF THE INVENTION

Such an enhanced Raman scattering laser system is known from the article "Enhanced SRS in H2 filled hollow core photonic crystal fibre by use of fibre Bragg grating" F. Couny, F. Benabid and O. Carraz, J. Opt. A: Pure Appl. Opt. 9 (2007), 156 - 159. In this known laser system laser light outputted by a laser is subsequently sent through a λ/2 wave plate and a polarization beam splitter to allow control over the input power. The laser light thereafter passes through a λ/4 wave plate to control input polarization and is directed towards focussing optics focussing outputted laser light into an input end of a hollow core photonic bandgap fibre, also called a hollow core photonic crystal fibre (HCPCF). The quarter-wave plate, the polarizing beam splitter and the half-wave plate function as a shutter for switching the laser on/off. The hollow core is filled with H₂, thereby forming the gas cell. In total three fibre Bragg gratings are attached to the HCPCF. Two of the fibre Bragg gratings at the first Stokes of ortho-H₂ are spliced at the ends of the gas cell to create the cavity. The third fibre Bragg grating at the pump wavelength is fusion-spliced to the output end of the gas cell in order to maximize the effective length of the pump laser and passes Raman light to an optical spectrum analyser. The two Stokes fibre Bragg gratings reflect light of one specific wavelength multiple times through the gas cell providing an enhancement of Raman scattering. Although this known laser system provides enhanced Raman scattering it is restricted in its use since light of one only specific wavelength is reflected multiple times, thereby reducing the variety of gasses and liquids to be studied.

### SUMMARY OF THE INVENTION

It therefore is an object of the invention to provide an enhanced Raman scattering laser system which is more versatile in its application. In addition it is a further object of the invention to provide a low cost, on-line, small gas sensor that can detect low concentrations of compounds in a variety of gases and even complex mixtures of gases.

According to the invention one of these objects or at least a part of at least one of these objects is obtained by providing an enhanced Raman scattering laser system as defined above which is characterized in that said fibre Bragg grating is the only fibre Bragg grating positioned between the laser and the optical spectrum analyser, and in that the enhanced Raman scattering laser system further comprises a second polarized beam splitter positioned between the first polarized beam splitter and the focusing optics and arranged for receiving laser light passed through the first polarized beam splitter and for passing through laser light to the focussing optics; and a Pockels cell and a Pockels cell driver, said Pockels cell being positioned between the first and second polarized beam splitters, said Pockels cell and Pockels cell driver being adapted for rotating the polarization of laser light during the first passage through the Pockels cell over 90° and for rotating the polarization of laser light during second and further passages through the Pockels cell over 0°. The invention is based on the insight that by using a single fibre Bragg grating and a Pockels cell which, in combination with the polarizing beam splitters, acts as a shutter preventing the light reflected from the fibre Bragg grating through the hollow core photonic bandgap fibre going back to the laser the possibility is created to use and reflect laser light having more than just one specific wavelength.

In an embodiment of the enhanced Raman scattering laser system according to the invention the laser light can be reflected multiple times through the hollow core photonic bandgap fibre when the enhanced Raman scattering laser system further comprises a first mirror arranged for receiving laser light reflected from the fibre Bragg grating from the first polarized beam splitter and for reflecting said reflected laser light back to the first polarized beam splitter; and a second mirror arranged for receiving laser light reflected from the fibre Bragg grating which has been passed through the second polarized beam splitter and for reflecting said reflected laser light back to the second polarized beam splitter; wherein said first and second mirrors and first and second polarized beam splitters are oriented such that the laser light reflected thereby and passed there through, respectively, is directed to the focussing optics. As a result the laser light used for interaction with the gas sample contained in the hollow core photonic bandgap fibre passes through the sample multiple times, thereby increasing the sensitivity and reducing the need for high powered lasers and highly sensitive spectrometers. Consequently, it is possible that the inventive enhanced Raman scattering laser system can be provided as a low cost, on-line, small gas sensor that can detect low concentrations of compounds in complex mixtures of gases.

Further objects, features, effects, advantages and details of the invention are described with reference to an example shown in the drawings

### BRIEF DESCRIPTION OF THE DRAWINGS

The invention will now be illustrated, in a non-limiting way, with reference to the accompanying drawing, wherein:

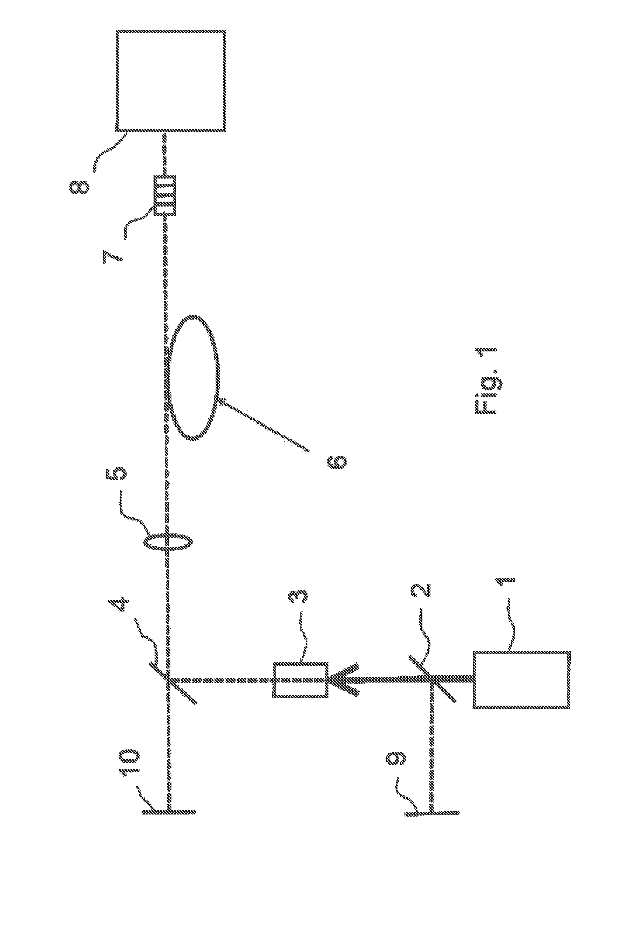

Figure 1 an enhanced Raman scattering laser system according to the invention is shown in which the laser light is indicated as an arrow between the laser and the Pockels cell;

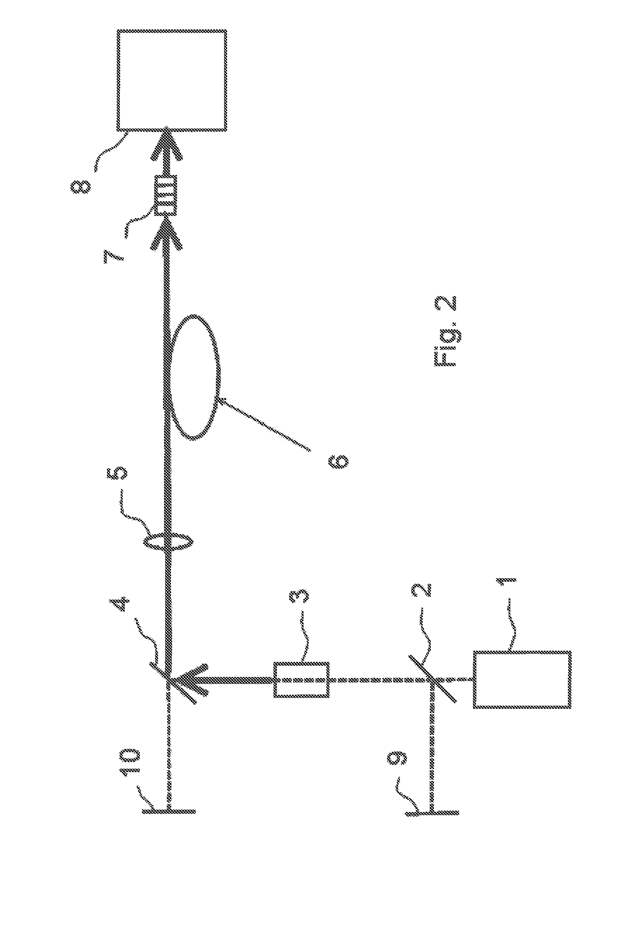

Figure 2 shows the enhanced Raman scattering laser system according to Figure 1 in which the laser light has propagated further and is indicated as an arrow between the Pockels cell and the fibre Bragg grating and the Raman light is indicated as an arrow reaching the optical spectrum analyser;

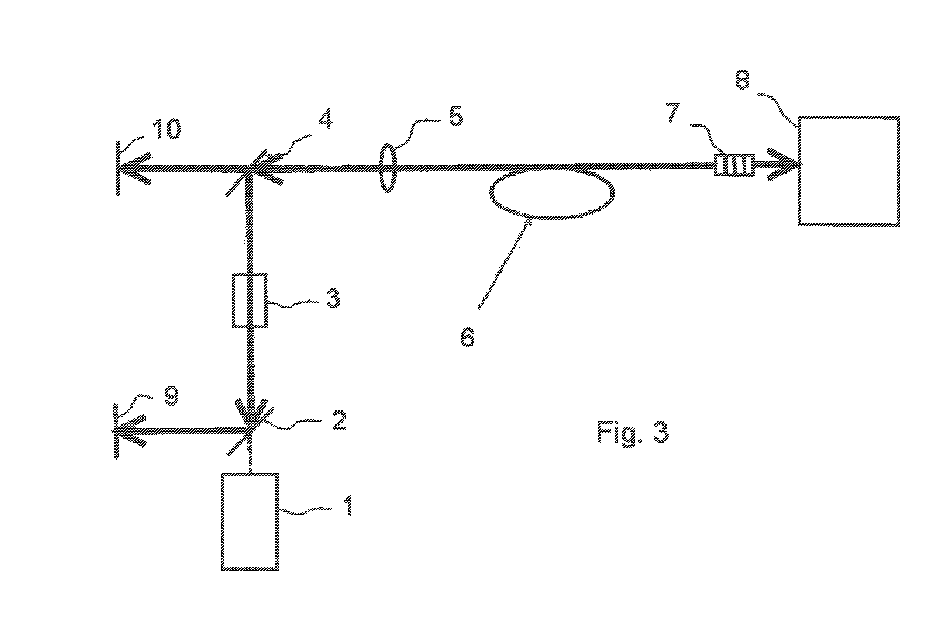

Figure 3 shows the enhanced Raman scattering laser system according to Figure 2 in which the laser light has been reflected from the fibre Bragg grating and is indicated as an arrow between the fibre Bragg grating and the first and second mirror, and the Raman light is indicated as an arrow reaching the optical spectrum analyser; and

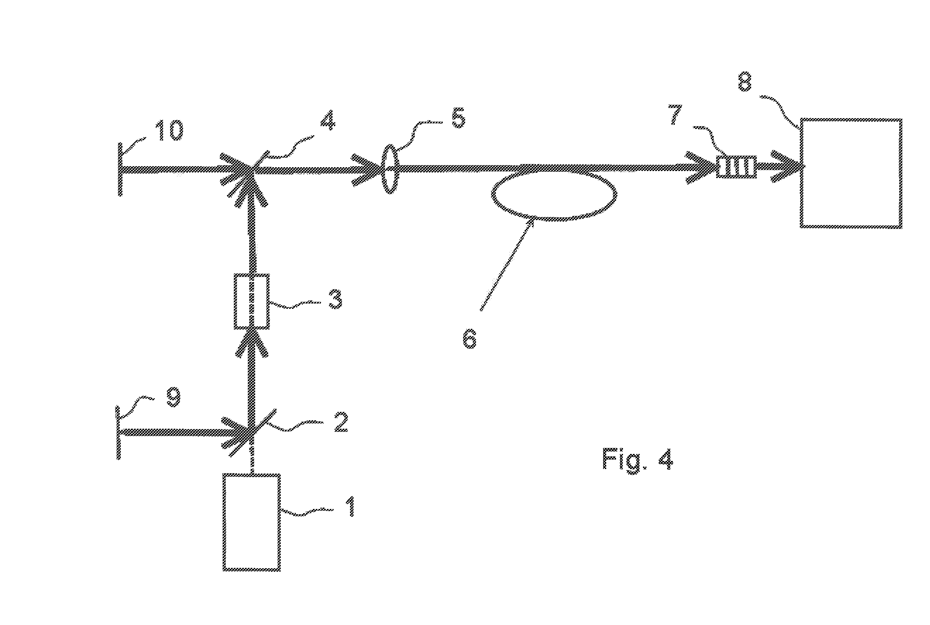

Figure 4 shows the enhanced Raman scattering laser system according to Figure 3 in which the laser light has been reflected from the first and second mirror and is indicated as an arrow between the first and second mirror reaching the fibre Bragg grating, and the Raman light is indicated as an arrow reaching the optical spectrum analyser.

### DETAILED DESCRIPTION

In Figures 1 to 4 an enhanced Raman scattering laser system according to the invention is shown schematically. The enhanced Raman scattering laser system comprises a laser 1 for outputting laser light. Possible paths of the laser light are indicated with dashed lines in the Figures.

The laser 1 directs laser light towards a first polarized beam splitter 2 which passes through outputted laser light towards a Pockels cell 3. In Figure 1 the laser light is indicated as an arrow between the laser 1 and the Pockels cell 3. A Pockels cell driver 11 drives the Pockels cell 3 such that the polarization of the laser light during the first passage through the Pockels cell is rotated over 90°.

As is indicated in Figure 2 by an arrow the laser light further propagates to a second polarized beam splitter 4 which, in this embodiment, deflects the laser light towards focussing optics 5 which focuses the laser light on the input end of a hollow core photonic bandgap fibre 6. The fibre 6 can be filled with a gas sample to be investigated. Please note that after the laser light has passed through the Pockels cell 3 for the first time, which Pockels cell 3 is positioned between the first polarized beam splitter 2 and the second polarized beam splitter 4, the Pockels cell driver 11 drives the Pockels cell 3 such that the polarization of laser light during second and further passages through the Pockels cell is rotated over 0°. Please note that the driver can perform this switch within nanoseconds.

After passing through the hollow core photonic bandgap fibre 6 the laser light leaves the output end of the hollow core photonic bandgap fibre 6 and impinges on a fibre Bragg grating 7 positioned between the output end of the hollow core photonic bandgap fibre 6 and an optical spectrum analyser 8. The fibre Bragg grating passes through Raman scattered light to the optical spectrum analyser 8 for further analysis.

In addition the fibre Bragg grating 7 reflects a part of the laser light back into the hollow core photonic fibre 6 as is shown in Figure 3. This reflected laser light is scattered by the gas sample in the hollow core photonic bandgap fibre 6 and this scattered light enters the optical spectrum analyser 8 as is indicated by the arrow between the fibre Bragg grating 7 and the optical spectrum analyser 8 in Figure 3.

The laser light reflected by the fibre Bragg grating 7 is then either reflected at the second polarizing beam splitter 4, passes through the Pockels cell 3 and is reflected by the first polarizing beam splitter 2 towards a first mirror 9 or passes through the second polarizing beam splitter 4 and impinges on a second mirror 10 as indicated by arrows in Figure 3. Since the Pockels cell 3 has been switched to the state in which it rotates the polarization of this reflected laser light over 0° the laser light will remain captured in the cavity.

The first mirror 9 is arranged for reflecting the laser light back to the first polarized beam splitter 2 which reflects the laser light towards the Pockels cell 3 and further through the remainder of the system as before as is indicated in Figure 4. The second mirror 10 is arranged for reflecting the laser light back towards the second polarized beam splitter 4 and further to the focusing optics 5 so that the laser light will again pass through the hollow core photonic bandgap fibre 6. Thus reflected laser light and scattered laser light again reaches the fibre Bragg grating 7 and the process is repeated.

Since the fibre Bragg grating 7 is the only fibre Bragg grating positioned between the laser 1 and the optical spectrum analyser 8 all the laser light is reflected multiple times through the hollow core photonic bandgap fibre 6, so that all the laser light can be used in a very effective way for sensing and detecting all kinds of different gases and liquids.

## Claims

1. An enhanced Raman scattering laser system, which comprises:
- a laser for outputting laser light;
- a first polarized beam splitter arranged for receiving and passing through outputted laser light;
- focussing optics arranged for receiving and focussing outputted laser light passed through the first polarized beam splitter;
- a hollow core photonic bandgap fibre arranged for receiving focussed laser light from the focussing optics at an input end of the hollow core photonic bandgap fibre and for outputting laser light at an output end of the hollow core photonic bandgap fibre;
- an optical spectrum analyser arranged for receiving laser light coming from the output end of the hollow core photonic bandgap fibre;
- a fibre Bragg grating positioned between the output end of the hollow core photonic bandgap fibre and the optical spectrum analyser, said fibre Bragg grating being arranged for reflecting part of the laser light back into the hollow core photonic fibre and for passing through Raman scattered light to the optical spectrum analyser;
**characterized in that**
said fibre Bragg grating is the only fibre Bragg grating positioned between the laser and the optical spectrum analyser, and **in that**
the enhanced Raman scattering laser system further comprises:
- a second polarized beam splitter positioned between the first polarized beam splitter and the focusing optics and arranged for receiving laser light passed through the first polarized beam splitter and for passing through laser light to the focussing optics; and
- a Pockels cell and a Pockels cell driver, said Pockels cell being positioned between the first and second polarized beam splitters, said Pockels cell and Pockels cell driver being adapted for rotating the polarization of laser light during the first passage through the Pockels cell over 90° and for rotating the polarization of laser light during second and further passages through the Pockels cell over 0°.

2. The enhanced Raman scattering laser system according to claim 1, **characterized in that** the enhanced Raman scattering laser system further comprises:
- a first mirror arranged for receiving laser light reflected from the fibre Bragg grating from the first polarized beam splitter and for reflecting said reflected laser light back to the first polarized beam splitter; and
- a second mirror arranged for receiving laser light reflected from the fibre Bragg grating which has been passed through the second polarized beam splitter and for reflecting said reflected laser light back to the second polarized beam splitter;
wherein said first and second mirrors and first and second polarized beam splitters are oriented such that the laser light reflected thereby and passed there through, respectively, is directed to the focussing optics.
